# FASCICULE DE BREVET EUROPEEN

(11) **EP 0 622 420 B1**
(45) Date de publication et mention de la délivrance du brevet: **02.10.2002**
(21) Numéro de dépôt: 94420132.6
(22) Date de dépôt: 27.04.1994
(51) Int. Cl.: C08L 83/04, C08K 5/05

(54) **Alcools alpha-acétyléniques à longue chaîne comme inhibiteurs de réaction d'hydrosilylation, et leur application pour la préparation de compositions silicones durcissables stables**
Langkettige alpha-acetylenische Alkohole als Inhibitoren für die Hydrosilylierungsreaktion; deren Anwendung in stabilen, härtbaren Siliconzusammensetzungen
Long chain alpha-acetylenic alcohols as inhibitors for hydrosilylation reactions, their use for preparing stable curable silicone compositions

(30) Priorité: 30.04.1993 FR 9305130
(43) Date de publication de la demande: 02.11.1994
(73) Titulaire: RHODIA CHIMIE, 92408 Courbevoie Cédex (FR)
(72) Inventeur: Frances, Jean-Marc, F-69330 Meyzieu (FR); Dordick, Robert Stuart, Matthews, North Carolina 28105 (US); Soldat, André, F-69008 Lyon (FR)
(74) Mandataire: Trolliet, Maurice

(56) Documents cités:
- EP-A- 0 451 946
- EP-A- 0 497 565
- FR-A- 1 528 464
- FR-A- 2 372 874
- CHEMICAL ABSTRACTS, vol. 113, no. 8, 20 Aoüt 1990, Columbus, Ohio, US; abstract no. 61033m, HARA, YUSUAKI 'retardation effect by acetylene derivatives on hydrosilylation. Estimation of the retarder 's capability by differential thermal analysis method.' & NIPPON KAGAKU KAISHI no. 5 , 1990 pages 541 - 546
- Beilsteins Handbuch der Organischen Chemie, Vierte Auflage, Viertes Ergänzungswerk, Erster Band, Vierter Teil, Springer Verlag, Berlin, 1974, pages 2289-2291, 2294-2296, 2298-2299
- Beilsteins Handbuch der Organischen Chemie, Vierte Auflage, Drittes Ergänzungswerk, Sechster Band, Fünfter Teil, Springer Verlag, Berlin, 1967, page 3563

## Description

La présente invention a pour objet l'utilisation d'alcools α-acétyléniques à longue chaîne (au moins en C₁₂) comme inhibiteurs de réaction d'hydrosilylation et leur emploi pour la préparation de compositions silicones durcissables stables, de préférence de type sans solvant, compositions utilisables notamment pour l'obtention de revêtements anti-adhérents.

Il est connu d'utiliser des composés acétyléniques tels que les alcools acétyléniques de point d'ébullition inférieur à 250°C, notamment le 2-méthyl 3-butyne 2-ol et l'éthynylcyclohexanol, comme inhibiteurs d'hydrosilylation dans des compositions durcissables, de type sans solvant, à base d'un polymère organosilicique portant des substituants à insaturation oléfinique (vinylique notamment), d'un polymère organohydrogénosiloxane et d'un catalyseur du type platine ou composé du platine. Ces compositions peuvent être déposées sur des supports tels que le papier, par enduction par exemple et durcies thermiquement à une température de l'ordre de 80 à 250°C, notamment entre 100 et 220°C, pendant 3 à 180 secondes (FR-B-1 528 464 ; FR-A-2 372 874).

Ces compositions présentent l'inconvénient, pour la préparation de revêtements antiadhérents, de ne pouvoir réticuler sur le support à une température inférieure à 80°C et de présenter une stabilité insuffisante en cours d'enduction sur machine, la gélification du bain d'enduction se manifestant déjà au bout d'une heure.

Cela est du au fait que ces inhibiteurs sont sublimables. Cet inconvénient majeur exige de les utiliser en quantité importante, ce qui se traduit par une forte inhibition de l'activité du platine et par voie de conséquence nécessite l'emploi d'une forte quantité dudit catalyseur.

La demanderesse a trouvé que l'emploi, comme inhibiteur d'hydrosylilation dans des compositions du même type, d'alcools α-acétyléniques à longue chaîne ( au moins en C₁₂), alcools dont le point d'ébullition est généralement supérieur à 250°C, permet d'obtenir des compositions
. stables pendant plusieurs heures lors des opérations d'enduction sur machine ;
. réticulant rapidement sur support à une température de durcissement inférieure à 80°C, de préférence même inférieure à 75°C;
. présentant une grande stabilité de bain à 40°C;
. pouvant éventuellement contenir des quantités inférieures de catalyseur d'hydrosilylation, étant donné qu'une quantité importante d'inhibiteur n'est plus nécessaire.

L'objet principal de l'invention consiste en l'utilisation d'un alcool acétylénique ayant pour formule

R - (R') C (OH) - C ≡ CH (I)

formule dans laquelle,
. R est un radical alkyle linéaire ou ramifié, ou un radical phényle ;
. R' est H ou un radical alkyle linéaire ou ramifié, ou un radical phényle ;
le nombre total d'atomes de carbone contenu dans R et R' étant d'au moins 9 et au plus égal à 20,
comme inhibiteur d'hydrosilylation dans des compositions silicones durcissables comprenant un polymère organosilicique portant des substituants à insaturation oléfinique, un polymère organohydrogénosiloxane et un catalyseur d'hydrosilylation.

Ledit alcool est de préférence choisi parmi ceux présentant un point d'ébullition supérieur à 250°C. On peut citer à titre d'exemple :
. le méthyl-3 dodécyne-1 ol-3 ;
. le triméthyl-3,7,11 dodécyne-1 ol-3 ;
. le diphényl-1,1 propyne-2 ol-3 ;
. l'éthyl-3 éthyl-6 nonyne-1 ol-3 ;
. le méthyl-3 pentadécyne-1 ol-3.

Ces alcools α-acétyléniques sont des produits du commerce.

Dans le cadre de l'utilisation conforme à l'invention, les compositions silicones durcissables qui vont contenir les inhibiteurs de formule (I) sont des compositions silicones durcissables par réaction d'hydrosilylation en présence d'un catalyseur d'hydrosilylation, notamment du type platine ou composé du platine les compositions sont tout particulièrement intéressantes pour l'obtention de revêtements anti-adhérents sur des supports souples, tels que par exemple papiers de type divers, carton, feuilles de cellulose, feuilles en métal, films de matière plastique. Plus précisément, pareilles compositions durcissables comprennent :
- z = (100-x-y) parties en poids d'au moins une huile polydiorganosiloxane "Si alcényle" de base (HB^{"Si alcényle"}) constitué par un polydiorganosiloxane linéaire ou cyclique bloqué par des groupes terminaux triorganosiloxanes, lesdits radicaux organiques étant des groupes alkyle ou cycloalkyle en C₁-C₁₈, alcényle en C₂-C₂₀, de préférence en C₂-C₁₂, alcényl(C₃-C₉)oxyalkylène(C₂-C₄), phényle, au moins 80% molaire desdits radicaux étant un groupe méthyle, au moins 0,1% molaire, de préférence de 0,5 à 5% molaire desdits radicaux organiques étant des groupes alcényle ou alcényloxyalkylène identiques ou différents liés directement au silicium ("Si alcényle") ;
- x parties en poids d'au moins une résine modulateur d'adhérence organopolysiloxane à fonctions "Si alcényle" (RM^{"Si alcényle"}), constituée d'au moins deux types de motifs siloxy différents "M" (R₃SiO_{1/2}), "Q" (SiO₂) et/ou "T" (RSiO_{3/2}) et éventuellement "D" (R₂SiO_{2/2}), les radicaux organiques étant identiques ou différents et représentant des groupes alkyle ou cycloalkyle en C₁-C₁₈, alcényle en C₂-C₂₀, de préférence en C₂-C₁₂, alcényl(C₃-C₉)oxyalkylène(C₂-C₄), au moins 80% molaire des radicaux organiques représentant un groupe méthyle, ladite résine contenant au moins 0,1% molaire, de préférence de 0,5 à 5% molaire desdits groupes alcényle ou alcényloxyalkylène identiques ou différents liés au silicium ("Si alcényle"), avec un rapport nombre de motifs "M"/ nombre de motifs "Q" et/ou "T'' de 0,6-1, le nombre de motifs "D" éventuels étant de 0,5-10 pour 100 moles de résine ;
- y parties en poids d'au moins une résine modulateur d'adhérence à fonction "SiH" organohydrogénopolysiloxane (RM^{"SiH"}) constituée d'au moins deux types de motifs siloxy différents "M" (R₃SiO_{1/2} ou R₂HSiO_{1/2}), "Q" et/ou "T" (RSiO_{3/2} ou HSiO_{3/2}) et éventuellement "D" (R₂SiO_{2/2} ou RHSiO_{2/2}), les radicaux organiques R étant semblables ou différents et représentant des groupes alkyle en C₁-C₁₈, phényle, au moins 80% molaire desdits radicaux représentant un groupe méthyle, ladite résine contenant au moins 0,5% molaire, de préférence de 0,5 à 5% molaire d'atomes d'hydrogène liés directement au silicium ("SiH"), avec un rapport nombre de motifs "M" /nombre de motifs "Q" et/ou "T" de 0,6-1, le nombre de motifs "D" éventuels étant de 0,5-10 pour 100 moles de résine, lesdites résines contenant moins de 10 % molaire, de préférence moins de 0,5% molaire et tout particulièrement moins de 0,3% molaire de fonctions silanol ;
   les valeurs de x et y étant telles que :
   . lorsque y=0, x va de 0 à 100
   . lorsque x=0, y va de 0 à 50
   . lorsque x et y sont différents de 0, x+y peut aller jusqu'à 100 avec toutefois x supérieur ou égal à y ;
- un agent de réticulation (AR^{"SiH"}) constitué
   . d'au moins un dihydrogénotetraorganodisiloxane (ARi^{"SiH"}) et/ou d'au moins un polyorganohydrogénosiloxane linéaire ou cyclique (ARii^{"SiH"}) contenant de 1,6 à 0,9 % molaire d'atomes d'hydrogène liés directement au silicium ("SiH") dans la chaîne, les radicaux organiques identiques ou différents étant des groupes alkyle en C₁-C₁₈, phényle, au moins 80 % molaire desdits radicaux organiques étant des groupes méthyle ;
   . éventuellement en mélange avec au moins une résine polyorganohydrogénosiloxane (ARiii^{"SiH"}) constituée de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
      selon un rapport pondéral (ARi^{"SiH"} et/ou ARii^{"SiH"}) / (ARiii^{"SiH"}) pouvant aller de 100/0 à 1/100, de préférence de 100/25 à 25/100, la présence de résine (ARiii^{"SiH"}) correspondant à une modalité préférée ;
- une quantité catalytiquement efficace d'un catalyseur d'hydrosilylation (C) la quantité de système agent réticulant (AR^{"SiH"}) étant telle que dans lesdites compositions durcissables le rapport nombre de moles de "SiH" provenant notamment dudit système agent de réticulation (AR^{"SiH"}) et éventuellement de la résine modulateur (RM^{"SiH"}) lorsqu'elle est présente / nombre de moles de "Si alcényle" provenant notamment de l'huile polyorganosiloxane (HB^{"Si alcényle"}) et/ou de la résine modulateur (RM^{"Si alcényle"}), soit supérieur à 1, de préférence de l'ordre de 1,1 à 1,6.

Un autre objet de l'invention concerne les compositions silicones durcissables complètes, comprenant un polymère organosilicique portant des substituants à insaturation oléfinique, un polymère organohydrogénosiloxane, un catalyseur d'hydrosilylation et l'inhibiteur d'hydrosilylation qui a été défini ci-avant. Plus précisément, ces compositions silicones durcissables complètes comprennent:
- 1) z = (100-x-y) parties en poids d'au moins une huile polydiorganosiloxane "Si alcényle" de base (HB^{"Si alcényle"}) constitué par un polydiorganosiloxane linéaire ou cyclique bloqué par des groupes terminaux triorganosiloxanes, lesdits radicaux organiques étant des groupes alkyle ou cycloalkyle en C₁-C₁₈, alcényle en C₂-C₂₀, de préférence en C₂-C₁₂, alcényl(C₃-C₉)oxyalkylène(C₂-C₄), phényle, au moins 80% molaire desdits radicaux étant un groupe méthyle, au moins 0,1% molaire, de préférence de 0,5 à 5% molaire desdits radicaux organiques étant des groupes alcényle ou alcényloxyalkylène identiques ou différents liés directement au silicium ("Si alcényle");
- 2) x parties en poids d'au moins une résine modulateur d'adhérence organopolysiloxane à fonctions "Si alcényle" (RM^{"Si alcényle"}), constituée d'au moins deux types de motifs siloxy différents "M" (R₃SiO_{1/2}), "Q" (SiO₂) et/ou "T" (RSiO_{3/2}) et éventuellement "D" (R₂SiO_{2/2}), les radicaux organiques étant identiques ou différents et représentant des groupes alkyle ou cycloalkyle en C₁-C₁₈, alcényle en C₂-C₂₀, de préférence en C₂-C₁₂, alcényl(C₃-C₉)oxyalkylène(C₂-C₄), au moins 80% molaire des radicaux organiques représentant un groupe méthyle, ladite résine contenant au moins 0,1% molaire, de préférence de 0,5 à 5% molaire desdits groupes alcényle ou alcényloxyalkylène identiques ou différents liés au silicium ("Si alcényle"), avec un rapport nombre de motifs "M"/ nombre de motifs "Q" et/ou "T" de 0,6-1, le nombre de motifs "D" éventuels étant de 0,5-10 pour 100 moles de résine ;
- 3) y parties en poids d'au moins une résine modulateur d'adhérence à fonction "SiH" organohydrogénopolysiloxane (RM^{"SiH"}) constituée d'au moins deux types de motifs siloxy différents "M" (R₃SiO_{1/2} ou R₂HSiO_{1/2}), "Q" et/ou "T" (RSiO_{3/2} ou HSiO_{3/2}) et éventuellement "D" (R₂SiO_{2/2} ou RHSiO_{2/2}), les radicaux organiques R étant semblables ou différents et représentant des groupes alkyle en C₁-C₁₈, phényle, au moins 80% molaire desdits radicaux représentant un groupe méthyle, ladite résine contenant au moins 0,5% molaire, de préférence de 0,5 à 5% molaire d'atomes d'hydrogène liés directement au silicium ("SiH"), avec un rapport nombre de motifs "M" /nombre de motifs "Q" et/ou "T" de 0,6-1, le nombre de motifs "D" éventuels étant de 0,5-10 pour 100 moles de résine, lesdites résines contenant moins de 10 % molaire, de préférence moins de 0,5% molaire et tout particulièrement moins de 0,3% molaire de fonctions silanol ;
   les valeurs de x et y étant telles que :
   . lorsque y=0, x va de 0 à 100
   . lorsque x=0, y va de 0 à 50
   . lorsque x et y sont différents de 0, x+y peut aller jusqu'à 100 avec toutefois x supérieur ou égal à y ;
- 4) un agent de réticulation (AR^{"SiH"}) constitué
   . 4i) 4ii) d'au moins un dihydrogénotetraorganodisiloxane (ARi^{"SiH"}) et/ou d'au moins un polyorganohydrogénosiloxane linéaire ou cyclique (ARii^{"SiH"}) contenant de 1,6 à 0,9 % molaire d'atomes d'hydrogène liés directement au silicium ("SiH") dans la chaîne, les radicaux organiques identiques ou différents étant des groupes alkyle en C₁-C₁₈, phényle, au moins 80 % molaire desdits radicaux organiques étant des groupes méthyle ;
   . 4iii) éventuellement en mélange avec au moins une résine polyorganohydrogénosiloxane (ARiii^{"SiH"}) constituée de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
      selon un rapport pondéral (ARi^{"SiH"} et/ou ARii^{"SiH"}) / (ARiii^{"SiH"}) pouvant aller de 100/0 à 1/100, de préférence de 100/25 à 25/100, la présence de résine (Ariii^{"SiH"}) correspondant à une modalité préférée ;
- 5) de l'ordre de 0,1 à 1 partie en poids, de préférence de l'ordre de 0,10 à 0,50 partie en poids d'un alcool α-acétylénique de formule (I) ci-dessus, comme agent inhibiteur (Al)
- 6) une quantité catalytiquement efficace d'un catalyseur d'hydrosilylation (C) la quantité de système agent réticulant (AR^{"SiH"}) étant telle que dans lesdites compositions durcissables le rapport nombre de moles de "SiH" provenant notamment dudit système agent de réticulation (AR^{"SiH"}) et éventuellement de la résine modulateur (RM^{"SiH"}) lorsqu'elle est présente / nombre de moles de "Si alcényle" provenant notamment de l'huile polyorganosiloxane (HB^{"Si alcényle"}) et/ou de la résine modulateur (RM^{"Si alcényle"}), soit supérieur à 1, de préférence de l'ordre de 1,1 à 1,6.

Les constituants polymères silicones (HB^{"Sialcényle"}), (RM^{"Sialcényle"}), (RM^{"SiH"}) et (AR^{"SiH"}) peuvent éventuellement se trouver sous forme diluée ou dispersée dans un solvant des polymères silicones.

A titre de solvants ou de diluants des polymères silicones, on peut citer :
- (a) des solvants hydrocarbonés classiques des résines silicone, solvants de type aromatique (par exemple xylène, toluène), aliphatique saturé (par exemple hexane, heptane, white-spirit, tétrahydrofuranne, diethyléther), solvants chlorés (par exemple chlorure de méthylène, perchloroéthylène);
   ils sont généralement mis en oeuvre selon une quantité correspondant à 50-70 parties en poids pour 30-50 parties en poids de polymère silicone ;
- (b) des solvants dits "réactifs" tels que
   . des résines organopolysiloxane liquides, dont les radicaux organiques sont des groupes alkyle ou cycloalkyle en C₁-C₁₈, alcényle en C₂-C₂₀, de préférence en C₂-C₁₂, présentant un rapport nombre de motifs "M"/ nombre de motifs "Q" et/ou "T" de l'ordre de 1 à 4 et éventuellement de 1 à 5 motifs "D" pour 100 moles de résine liquide, et contenant de 0,5 à 5 % molaire de fonctions alcényle liées au silicium ("Si alcényle") ou d' atomes d'hydrogène liés au silicium ("SiH") ; ces résines présentent une viscosité à 25°C inférieure à 100 mPas., de préférence de l'ordre de 2 à 50 mPa.s;
      ces résines liquides sont des produits connus ; elles sont notamment décrites dans le brevet US -A- 4,707,531 et la demande européenne EP -A- 389 138 ;
   . et/ou des huiles organopolysiloxanes fluides, dont les radicaux organiques sont des groupes alkyle ou cycloalkyle en C₁-C₁₈, alcényle en C₂-C₂₀, alcényl(C₃-C₉)oxyalkylène(C₂-C₄), huiles contenant de 0,2 à 5 % molaire de fonctions alcényle ou alcényloxyalkylène liées au silicium, en bout(s) de chaîne ou dans la chaîne, lesdites huiles présentant une viscosité inférieure à 200 mPa.s ;
   . et/ou des hydrocarbures à insaturation(s) oléfinique(s) tels que par exemple oléfines en C₁₄-C₁₈, dibutylmaléate, décylvinyléther, dodécylvinyléther, camphène, méta-bis isopropénylbenzène ;
      les solvants dits "réactifs" sont généralement mis en oeuvre selon une quantité correspondant à 20-50 parties en poids pour 80-50 parties en poids de polymère silicone ;
- (c) des émulsions aqueuses d'agents tensio-actifs non-ioniques (par exemple alcool polyvinylique, alkylphénolpolyéthoxylés, éthers oxyéthylénés d'alcools gras) contenant généralement de l'ordre de 1-3% en poids d'agent tensio-actif ;
   elles sont généralement mises en oeuvre à raison de 40-70 parties en poids pour 60-30 parties en poids de polymère silicone.

Le polydiorganosiloxane linéaire ou cyclique à fonctions "Si alcényie" (HB^{"Si alcényle"}) présente une viscosité d'au moins 50 mPa.s., généralement de l'ordre de 150 à 1000 mPa.s. Les huiles vinylées sont des produits du commerce habituellement mises en oeuvre pour préparer des compositions durcissables antiadhérentes ( brevet US -A- 4,623,700) ; celles à groupements alcényle plus lourds ou alcényloxyalkylène (A1) sont décrites notamment dans les brevets EP - B- 219 720 et EP-A-454 130.

Les résines modulateur à fonctions "Si alcényle" (RM^{"Si alcényle"}), notamment les résines vinylées, sont bien connues de l'homme de l'art ; les groupes alcényle ou alcényloxy peuvent être situés sur les motifs "M", "D" ou "T"; elles peuvent être préparées par exemple selon le procédé décrit dans le brevet US -A- 2 676 182 ou par celui décrit dans le brevet US - A 4,611,042 ; un traitement bien connu de l'homme de l'art, à l'aide d'un silazane, permet d' abaisser à moins de 0,3 % en poids, le taux de fonctions silanol restantes , ce afin d'éviter des réactions parasites de condensation ; un certain nombre de ces résines sont disponibles dans le commerce, le plus souvent à l'état de solutions, par exemple à 40-70 % dans un solvant tel que le toluène ou le xylène.
Comme exemple de résine modulateur à fonctions "Si alcényle" on peut citer :
. MD^{Vi}Q où les groupes vinyle sont inclus dans les motifs "D" ;
. MM^{Vi}Q où les groupes vinyle sont inclus dans une partie des motifs "M"
. MD^{Vi}T où les groupes vinyle sont inclus dans les motifs "D"
. MM^{Héxényl}Q où les groupes héxényle sont inclus dans une partie des motifs "M"
. MM^{Allyloxypropyl}Q où les groupes allyloxypropyle sont inclus dans une partie des motifs "M"

Les résines modulateur à fonctions "Si H" (RM^{"SiH"}) sont également bien connues ; elles sont notamment décrites dans le brevet US -A-3,772,247 ; les atomes d'hydrogène peuvent être situés dans la chaîne ou en bout(s) de chaîne ; un certain nombre de ces résines sont disponibles dans le commerce, le plus souvent à l'état de solutions, par exemple à 40-70 % dans un solvant tel que le toluène ou le xylène.
Comme exemple de résines modulateur à fonction "SiH", on peut citer :
. MD'Q où les atomes d'hydrogène liés au silicium sont inclus dans les motifs "D"
. MM'Q où les atomes d'hydrogène liés au silicium sont inclus dans une partie des motifs "M"
. MM'DQ où les atomes d'hydrogène liés au silicium sont inclus dans une partie des motifs "M"
. MDT où les atomes d'hydrogène liés au silicium sont inclus dans les motifs "T"

L'agent de réticulation dihydrogénotetraorganodisiloxane (ARi^{"SiH"} ) est de préférence le dihydrogénotetraméthyldisiloxane

L'agent de réticulation polyorganohydrogénosiloxane linéaire ou cyclique (ARii^{"SiH"}) comportant des fonctions "SiH" dans la chaîne présente une viscosité dynamique à 25°C de l'ordre de 10 à 100 mPa.s.

Ledit polyorganohydrogénosiloxane linéaire ou cyclique (ARii^{"SiH"}) contient de préférence en moyenne par molécule au moins un motif "SiH" pour 4 atomes de silicium.

La résine polyorganohydrogénosiloxane agent de réticulation (ARiii^{"SiH"}) à fonctions "SiH" en bout de chaîne présente une viscosité dynamique à 25°C de l'ordre de 1 à 20 mPa.s. ; elle contient de préférence en moyenne un nombre de motifs "SiH" allant de 4 motifs "SiH" pour 5 atomes de silicium à 8 motifs "SiH" pour 12 atomes de silicium.

La viscosité dynamique à 25°C des polymères silicones ci-dessus peut être mesurée à l'aide d'un viscosimètre BROOKFIELD selon la norme AFNOR NFT 76 102 de février 1972.

Parmi les catalyseurs pouvant être présents on peut citer les dérivés et complexes bien connus de métaux tels que par exemple platine, rhodium, ruthénium. Des exemples de catalyseurs sont donnés dans les brevets US-A- 3,159,601 ; 3,159,662 ; 3,220,972 ; 3,715,334 ; 3,775,452 ; 3,814,730 ; 3,296,291 ; 3,928,629 ; français FR - A- 1 313 846 ; 1 480 409. Ils sont généralement mis en en oeuvre selon une quantité de l'ordre de 5 à 500 parties en poids exprimées en métal par million de parties en poids de polymères silicones réactifs.

Comme mentionné ci-dessus, les constituants polymères silicones peuvent se trouver sous forme dispersée dans des émulsions aqueuses d'agents tensio-actifs non-ioniques.

Les compositions en émulsion aqueuse ainsi obtenues peuvent en outre contenir des latex de polymères organiques selon des quantités correspondant à un rapport pondéral silicone/polymère organique, exprimé en matières sèches, de l'ordre de 5/95 à 95/5, de préférence de l'ordre de 95/5 à 60/40.

Les polymères organiques préférentiellement mis en oeuvre sont de préférence ceux présentant une température de transition vitreuse Tg de l'ordre de -30°C à +100°C. Parmi ceux-ci, on peut citer les polymères et copolymères acryliques ou méthacryliques, les polymères et copolymères du styrène (par exemple styrène/butadiène, styrène/acrylate d'alkyle, éventuellement carboxylés, styrène/isoprène), le polychloroprène, les copolymères éthylène/acétate de vinyle, l'alcool polyvinylique.

Lesdites compositions ci-dessus décrites, telles quelles ou en émulsions aqueuses, peuvent être "monocomposants", c'est-à-dire préparées par mélange de leurs différents constituants 1) à 6) et stockées préalablement à leur utilisation.

Elles sont toutefois de préférence "multicomposants", c'est-à-dire préparées au moment même de leur utilisation par mélange de différents "composants" formés de prémélanges d'un certain nombre desdits constituants entre eux.

Ledit inhibiteur (Al) de l'invention peut à lui seul être un "composant" desdites compositions ci-dessus décrites.

Dans un même "composant" il est recommandé de ne pas rassembler le polydiorganosiloxane "Si alcényle" de base (HB^{"Si alcényle"}) et/ou la résine modulateur d'adhérence organopolysiloxane à fonctions "Si alcényle" (RM^{"Si alcényle"}), le ou les constituants de l'agent de réticulation (AR^{"SiH"}) et/ou la résine modulateur (RM^{"SiH"}) et le catalyseur d'hydrosilylation (C).

De même il est préférable de ne pas réunir au sein d'un même composant l'inhibiteur (Al) et le catalyseur d'hydrosilylation (C).

La présente invention a également pour objet les "composants" dans lesquels est présent l'inhibiteur (Al) de l'invention, choisis dans le groupe formé par les "composants" constitués :
- a) d'un mélange de l'inhibiteur (Al), de l'huile polydiorganosiloxane "Si alcényle" de base (HB^{"Si alcényle"}) et/ou de la résine modulateur d'adhérence organopolysiloxane à fonctions "Si alcényle" (RM^{"Si alcényle"}), telle(s) quelle(s) ou en émulsion aqueuse ;
- b) d'un mélange de l'inhibiteur (Al), du dihydrogénotetraorganodisiloxane réticulant (ARi^{"SiH"}) et/ou du polyorganohydrogénosiloxane linéaire ou cyclique réticulant (ARii^{"SiH"}) et/ou de la résine polyorganohydrogénosiloxane (ARiii^{"SiH"}) et/ou de la résine modulateur à fonctions "SiH" (RM^{"SiH"}), tel(s) quel(s) ou en émulsion aqueuse ;
- c) d'un mélange de l'inhibiteur (Al), de la résine modulateur d'adhérence organopolysiloxane à fonctions "Si alcényle" (RM^{"Si alcényle"}) et de la résine modulateur à fonctions "SiH" (RM^{"SiH"}), telle(s) quelle(s) ou en émulsion aqueuse ;
- d) d'un mélange de l'inhibiteur (Al), de l'huile polydiorganosiloxane "Si alcényle" de base (HB^{"Si alcényle"}) et/ou de la résine modulateur d'adhérence organopolysiloxane à fonctions "Si alcényle" (RM^{"Si alcényle"}), et du dihydrogénotetraorganodisiloxane réticulant (ARi^{"SiH"}) et/ou du polyorganohydrogénosiloxane linéaire ou cyclique réticulant (ARii^{"SiH"}) et/ou de la résine polyorganohydrogénosiloxane (ARiii^{"SiH"}) et/ou de la résine modulateur à fonctions "SiH" (RM^{"SiH"}), tel(s) quel(s) ou en émulsion aqueuse ;
- e) ainsi que l'un quelconque des "composants" a) à d) ci-dessus comprenant en outre le latex de polymère organique tel que ci-dessus défini.

Les compositions durcissables faisant l'objet de l'invention, sont fluides à température normale ; leur viscosité est généralement de l'ordre de 100 à 500 mPas. à 25 °C.

Elles peuvent être appliquées à l'aide de dispositifs utilisés sur les machines industrielles d'enduction du papier tels que par exemple tête d'enduction à cinq rouleaux, systèmes à lames d'air, à barre égalisatrice, sur des supports ou matériaux souples, puis durcies à la chaleur par exemple à l'aide de lampes infra-rouge, de radiations UV ou de préférence par circulation dans des fours-tunnels chauffés à 70-200 °C ; le temps de passage dans ces fours est fonction de la température et de longueur du tunnel ; ce temps de passage est généralement de l'ordre de 5 à 15 secondes à une température de l'ordre de 100°C et de l'ordre de 1,5 à 3 secondes à une température de l'ordre de 180 °C pour une longueur de tunnel de 6 mètres.

Lesdites compositions peuvent être déposées sur tout matériau ou substrat souple tel que par exemple papiers de types divers (par exemple supercalendré, couché), cartons, feuilles de cellulose, feuilles en métal, films de matière plastique (par exemple polyester, polyéthylène, polypropylène).

Les quantités de compositions déposées sont de l'ordre de 0,5 à 2 g par m² de surface à traiter, ce qui correspond au dépot de couches de l'ordre de 0,5 à 2 µm.

Les matériaux ou supports ainsi enduits peuvent ultérieurement être mis en contact avec des matières adhésives quelconques caoutchoucs, acryliques ou autres, sensibles à la pression . La matière adhésive est alors aisément détachable dudit support ou matériau.

Les exemples suivants sont donnés à titre indicatif et ne peuvent être considérés comme une limite du domaine et de l'esprit de l'invention.

### Exemples 1-8

### Préparation des bains d'enduction

Dans 100 parties en poids d'une huile polyméthylvinylsiloxane présentant une viscosité de 400 mPa.s. et contenant 1% molaire de fonctions "SiVi" sous forme de motifs Me₂ViSiO_{1/2} et MeViSiO, on ajoute environ 1,2 x 10⁻³ mole d'un alcool α-acétylénique choisi parmi les:
- pentyne-1 ol-3 C₅H₈O 0,10g. exemple 1
- octyne-1 ol-3 C₈H₁₄O 0,15g. exemple 2
- éthynylcyclopentanol C₇H₁₀O 0,13g. exemple 3
- éthynylcyclohexanol C₈H₁₂O 0,15g. exemple 4
- éthynylcycloheptanol C₉H₁₄O 0,17g. exemple 5
- diméthyl-3,5 hexyne-1 ol-3 C₈H₁₄O 0,15g. exemple 6
- méthyl-3 dodécyne-1 ol-3 C₁₃H₂₄O 0,23g. exemple 7
- triméthyl-3,7,11 dodécyne-1 ol-3 C₁₅H₂₈O 0,27g. exemple 8 On ajoute ensuite une huile polyorganohydrogénosiloxane linéaire contenant environ en moyenne 1,5% molaire d'atomes d'hydrogène liés directement au silicium ("SiH") dans la chaîne et présentant une viscosité dynamique à 25°C de l'ordre de 50 mPa.s., en quantité correspondant à un rapport molaire SiH/SiVi de 1,4.
   Après agitation, on incorpore 90 parties par million de platine, sous forme d'un complexe de ce métal préparé à partir d'acide chloroplatinique et de divinyl-1,3 tétraméthyl-1,1,3,3 disiloxane comme décrit à l'exemple 1 du brevet US-A-3,814,730.
   Après homogéneisation vigoureuse, le mélange est prêt à l'emploi.

### Enduction sur papier - Comportement des papiers enduits vis-à vis des adhésifs

L'appareil utilisé est une machine pilote ROTOMEC® (commercialisée par ROTOMEC) équipée d'une tête sans solvant à cinq cylindres.
Le support utilisé est du papier glassine
- soit de type SIBILLE® 9564 commercialisé par SIBILLE
- soit de type KAEMMERER® AV 100 commercialisé par KAEMMERER dont le grammage est de l'ordre de 60 à 70 g/m².
   L'enduction est réalisée à une vitesse de défilement du papier de 100 m/mn., pour une température du four de 125°C, ce qui correspond à une température de réticulation sur le support de 85°C.
   Les supports enduits sont enfin prélevés immédiatement à la sortie de la machine.
   La quantité de revêtement déposée est mesurée par fluorescence X ; elle est de l'ordre de 1 g/m² de support.
   Les papiers enduits obtenus sont mis en contact avec les rubans adhésifs suivants
- TESA®4651 (caoutchouc)
- TESA®4970 (acrylique)
commercialisés par BEIERSDORF.
Les complexes formés sont déposés dans une salle conditionnée (température de 23°C ± 2°C ; degré d'humidité de 50 % ± 5).
La qualité des revêtements est évaluée par mesure de la force d'adhérence (ou de décollement), exprimée en cN/cm selon le test FINAT n° 10 à l'aide d'un dynamomètre INSTRON® (commercialisé par INSTRON) avec une vitesse de décollement de 0,3 m/mn
Les résultats des mesures sont donnés au tableau 1.

On constate qu'à l'exception des alcools α-acétyléniques des exemples 1 et 2, les autres inhibiteurs conduisent à des performances d'enduction similaires, toutes conditions égales par ailleurs.

### Mesure de la réactivité

La réactivité des bains est mesurée
- d'une part en suivant l'évolution de la viscosité du bain sur un appareil RAPRA VNC® (Vibrating Needle Curemeter) de RAPRA Technologie ; on mesure le temps, en minutes, nécessaire pour obtenir la gélification (déterminée à l'aide d'une aiguille vibrant dans le bain à une fréquence d'environ 40 Hz) dans un four chauffé à 70°C.
- et d'autre part en suivant l'évolution thermique de la réaction de réticulation par analyse thermique différentielle (DSC) entre 0 et 250°C sur un appareil METTLER T.A. 3 000® en utilisant de 5 à 10 mg. de produit déposés dans une nacelle scellée, la température croissant de 10°C par minute.
Les résultats des mesures figurent au tableau 2.

Les alcools α-acétyléniques des exemples 1 et 2 conduisent à des bains très réactifs. Par contre on constate que l'enthalpie ΔH de la réaction n'est pas affectée par le type d'alcool α-acétylénique, preuve d'une transformation totale des sites réactifs.

### Mesure de la stabilité des bains à 40°C

L'évolution de la viscosité des bains en fonction du temps est mesurée à l'aide d'un viscosimètre BROOKFIELD.
Le pot de réaction est plongé dans un bain thermostaté à 40°C ; la mesure est arrêtée lorsque la viscosité atteint 2 000mPa.s.; on note le temps écoulé.
Les résultats figurent au tableau 3.

### Mesure de la stabilité par mesure du temps de polymérisation en couche mince

Le support utilisé est un film polyester .TERPHANE® de 36 µm d'épaisseur, commercialisé par RHONE-POULENC.
L'enduction est réalisée de manière classique à l'aide d'un système manuel d'enduction (ROLL COATER®, commercialisé par ETM)
Le film enduit est placé en salle conditionnée (degré d'humidité de 55% ; température de 20°±1).
On suit l'évolution de l'enduction par frottement au doigt ; la mesure est arrêtée lorsque le film est "sec"; on mesure le temps qui s'est écoulé.
Les résultats figurent au tableau 3.

On constate très nettement l'avantage de l'emploi d'alcools α-acétyléniques contenant un nombre d'atomes de carbone au moins égal à 12, c'est-à-dire contenant un nombre d'atomes de carbone, dans l'ensemble R + R' de la formule (I), au moins égal à 9. La stabilité des bains aussi bien en pot à 40°C, qu'en couche mince à 20°C est très fortement augmentée lorsqu'on utilise des inhibiteurs en C₁₃ et C₁₅ (exemples 7 et 8), c'est-à-dire des inhibiteurs contenant 10 et 12 atomes de carbone dans l'ensemble R + R' de la formule (I).

### Exemple 9

On prépare comme ci-dessus un bain d'enduction, en incorporant 0,23g. de méthyl-3 dodécyne-1 ol-3 comme inhibiteur, dans 100g. d'une huile polyméthylvinylsiloxane présentant une viscosité de 400 mPa.s. et contenant 1% molaire de fonctions "SiVi" sous forme de motifs Me₂ViSiO_{1/2} et MeViSiO.
On ajoute un mélange de réticulants constitué de
- 60 parties en poids d'une huile polyorganohydrogénosiloxane linéaire contenant environ en moyenne 1,5% molaire d'atomes d'hydrogène liés directement au silicium ("SiH") dans la chaîne et présentant une viscosité dynamique à 25°C de l'ordre de 50 mPa.s.,
- et de 40 parties en poids d'une résine polyorganohydrogénosiloxane constituée de motifs Me₂HSiO_{1/2} et SiO₂, contenant 1% molaire d'atomes d'hydrogène liés au silicium, de viscosité dynamique de l'ordre de 10 mPa.s.
en quantité correspondant à un rapport molaire SiH/SiVi de 1,4.
On ajoute ensuite 90 ppm du catalyseur au platine décrit ci-dessus.
Les performances de cette préparation figurent aux tableaux 1 à 3 ; l'opération d'enduction sur papier a été réalisée à une vitesse de défilement du papier de 120 m/mn, pour une température du four de 125°C, ce qui correspond à température de 75°C sur le support.
Ces performances sont comparées à celles du bain de l'exemple 7

### Exemple 10

On répète l'opération de l'exemple 7, en mettant en oeuvre comme huile de base une huile polyméthylhexénylsiloxane présentant une viscosité de l'ordre de 500 mPa.s. et contenant 1% molaire de fonctions "SiHexényl" sous forme de motifs Me₂HexénylSiO_{1/2} et MeHéxenylSiO.
Les performances du bain obtenu figurent aux tableaux 1 à 3 ; l'opération d'enduction sur papier a été réalisée à une vitesse de défilement du papier de 110 m/mn, pour une température du four de 125°C, ce qui correspond à température de 80°C sur le support.

### Exemple 11

On répète l'opération décrite à l'exemple 9, en mettant en oeuvre comme huile de base une huile polyméthylhexénylsiloxane présentant une viscosité de l'ordre de 500 mPa.s. et contenant 1% molaire de fonctions "SiHexényl" sous forme de motifs Me₂HexénylSiO_{1/2} et MeHéxenylSiO.
Les performances du bain obtenu figurent aux tableaux 1 à 3 ; l'opération d'enduction sur papier a été réalisée à une vitesse de défilement du papier de 140 m/mn, pour une température du four de 125°C, ce qui correspond à température de 65°C sur le support.

Les résultats des exemples 9 et 11, comparés respectivement aux exemples 7 et 10, montrent que l'emploi d'un système réticulant (huile à motifs "SiH" dans la chaîne + résine à motifs "SiH" terminaux) améliore très nettement la vitesse de polymérisation sans pour autant diminuer la stabilité du bain.

**Tableau 1**

| ex | temp. du four °C | vitesse d'enduction m/min | temp. sur support °C | polymérisation en sortie machine | adhésivation subséquente % | adhérence cN/cm | |
|---|---|---|---|---|---|---|---|
| | | | | | | TESA 4651 | TESA 4970 |
| 1 | 125 | 100 | 85 | mauvaise* | - | - | - |
| 2 | 125 | 100 | 85 | mauvaise* | - | - | - |
| 3 | 125 | 100 | 85 | bonne | 98 | 3,5 | 10 |
| 4 | 125 | 100 | 85 | bonne | 100 | 3,7 | 9,5 |
| 5 | 125 | 100 | 85 | bonne | 99 | 3,6 | 9,8 |
| 6 | 125 | 100 | 85 | bonne | 98 | 3,3 | 9,4 |
| 7 | 125 | 100 | 85 | bonne | 100 | 3,4 | 10,1 |
| 8 | 125 | 100 | 85 | bonne | 98 | 3,7 | 9,5 |
| | | | | | | | |
| 7 | 125 | 100 | 85 | bonne | 98 | 3,5 | 11 |
| 9 | 125 | 120 | 75 | bonne | 99 | 3,8 | 10,5 |
| | | | | | | | |
| 10 | 125 | 110 | 80 | bonne | 97 | 3,7 | 10 |
| 11 | 125 | 140 | 65 | bonne | 98 | 3,5 | 10,5 |

| | | | | | | | |
|---|---|---|---|---|---|---|---|
| (*) le bain polymérise sur les cylindres d'enduction | | | | | | | |

**Tableau 2**

| exemple | temps de gel à 70°C sur VNC (mm) | DSC | | ΔH J/g |
|---|---|---|---|---|
| | | temp. de début de pic °C | temp.de sommet de pic °C | |
| 1 | 4,8 | 61 | 76 | 37 |
| 2 | 21 | 61 | 78 | 37 |
| 3 | 33 | 85 | 103 | 39 |
| 4 | 35 | 79 | 100 | 38 |
| 5 | 40 | 85 | 106 | 39 |
| 6 | 40 | 82 | 100 | 38 |
| 7 | 45 | 81 | 100 | 38 |
| 8 | 45 | 80 | 105 | 39 |
| | | | | |
| 7 | 45 | 81 | 100 | 38 |
| 9 | 35 | 72 | 98 | 39 |
| | | | | |
| 10 | 38 | 78 | 98 | 39 |
| 11 | 30 | 69 | 97 | 38 |

**Tableau 3**

| exemple | temps pour atteindre une viscosité de 2000 mPa.s. | temps de polymérisation en couche mince (min) |
|---|---|---|
| 1 | gelification en quelques minutes | 15 |
| | | |
| 2 | gelification en 30 minutes | 20 |
| 3 | 8 heures | 40 |
| 4 | 9 heures | 80 |
| 5 | 9 heures | 80 |
| 6 | 9 heures | 50 |
| 7 | 15 heures | 1500 |
| 8 | 15 heures | 1500 |
| | | |
| 7 | 15 heures | 1500 |
| 9 | 12 heures | 1350 |
| | | |
| 10 | 14 heures | 1300 |
| 11 | 10 heures | 950 |

## Revendications

1. Utilisation d'un alcool acétylénique ayant pour formule
R - (R') C (OH) - C ≡ CH (I)
formule dans laquelle,
. R est un radical alkyle linéaire ou ramifié, ou un radical phényle ;
. R' est H ou un radical alkyle linéaire ou ramifié, ou un radical phényle ;
le nombre total d'atomes de carbone contenu dans R et R' étant d'au moins 9 et au plus égal à 20,
comme inhibiteur d'hydrosilylation dans des compositions silicones durcissables comprenant un polymère organosilicique portant des substituants à insaturation oléfinique, un polymère organohydrogénosiloxane et un catalyseur d'hydrosilylation.

2. Utilisation selon la revendication 1), **caractérisée en ce que** l'alcool acétylénique présente un point d'ébullition supérieur à 250°C.

3. Utilisation selon la revendication 1) ou 2), **caractérisée en ce que** l'alcool acétylénique est choisi parmi
. le méthyl-3 dodécyne-1 ol-3 ;
. le triméthyl-3,7,11 dodécyne-1 ol-3 ;
. le diphényl-1,1 propyne-2 ol-1 ;
. l'éthyl-3 éthyl-6 nonyne-1 ol-3 ;
. le méthyl-3 pentadécyne-1 ol-3.

4. Utilisation selon l'une quelconque des revendications 1) à 3), **caractérisée en ce que** les compositions durcissables comprennent :
- z = (100-x-y) parties en poids d'au moins une huile polydiorganosiloxane "Si alcényle" de base (HB^{"Si alcényle"}) constitué par un polydiorganosiloxane linéaire ou cyclique bloqué par des groupes terminaux triorganosiloxanes, lesdits radicaux organiques étant des groupes alkyle ou cycloalkyle en C₁-C₁₈, alcényle en C₂-C₂₀, alcényl(C₃-C₉)oxyalkylène(C₂-C₄), phényle, au moins 80% molaire desdits radicaux étant un groupe méthyle, au moins 0,1% molaire desdits radicaux organiques étant des groupes alcényle ou alcényloxyalkylène identiques ou différents liés directement au silicium ("Si alcényle") ;
- x parties en poids d'au moins une résine modulateur d'adhérence organopolysiloxane à fonctions "Si alcényle" (RM^{"Si alcényle"}), constituée d'au moins deux types de motifs siloxy différents "M" (R₃SiO_{1/2}), "Q" (SiO₂) et/ou "T' (RSiO_{3/2}) et éventuellement "D" (R₂SiO_{2/2}), les radicaux organiques étant identiques ou différents et représentant des groupes alkyle ou cycloalkyle en C₁-C₁₈, alcényle en C₂-C₂₀, alcényl(C₃-C₉)oxyalkylène(C₂-C₄), au moins 80% molaire des radicaux organiques représentant un groupe méthyle, ladite résine contenant au moins 0,1% molaire desdits groupes alcényle ou alcényloxyalkylène identiques ou différents liés au silicium ("Si alcényle"), avec un rapport nombre de motifs "M"/ nombre de motifs "Q" et/ou "T" de 0,6-1, le nombre de motifs "D" éventuels étant de 0,5-10 pour 100 moles de résine ;
- y parties en poids d'au moins une résine modulateur d'adhérence à fonction "SiH" organohydrogénopolysiloxane (RM^{"SiH"}) constituée d'au moins deux types de motifs siloxy différents "M" (R₃SiO_{1/2} ou R₂HSiO_{1/2}), "Q" et/ou "T' (RSiO_{3/2} ou HSiO_{3/2}) et éventuellement "D" (R₂SiO_{2/2} ou RHSiO_{2/2}), les radicaux organiques R étant semblables ou différents et représentant des groupes alkyle en C₁-C₁₈, phényle, au moins 80% molaire desdits radicaux représentant un groupe méthyle, ladite résine contenant au moins 0,5% molaire d'atomes d'hydrogène liés directement au silicium ("SiH"), avec un rapport nombre de motifs "M" / nombre de motifs "Q" et/ou "T' de 0,6-1, le nombre de motifs "D" éventuels étant de 0,5-10 pour 100 moles de résine, lesdites résines contenant moins de 10 % molaire de fonctions silanol ;
les valeurs de x et y étant telles que :
. lorsque y=0, x va de 0 à 100
. lorsque x=0, y va de 0 à 50
. lorsque x et y sont différents de 0, x+y peut aller jusqu'à 100 avec toutefois x supérieur ou égal à y ;
- un agent de réticulation (AR^{"SiH"}) constitué
. d'au moins un dihydrogénotetraorganodisiloxane (ARi^{"SiH"}) et/ou d'au moins un polyorganohydrogénosiloxane linéaire ou cyclique (ARii^{"SiH"}) contenant de 1,6 à 0,9 % molaire d'atomes d'hydrogène liés directement au silicium ("SiH") dans la chaîne, les radicaux organiques identiques ou différents étant des groupes alkyle en C₁-C₁₈, phényle, au moins 80 % molaire desdits radicaux organiques étant des groupes méthyle ;
. éventuellement en mélange avec au moins une résine polyorganohydrogénosiloxane (ARiii^{"SiH"}) constituée de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
selon un rapport pondéral (ARi^{"SiH"} et/ou ARii^{"SiH"}) / (ARiii^{"SiH"}) pouvant aller de 100/0 à 1/100;
- une quantité catalytiquement efficace d'un catalyseur d'hydrosilylation (C) la quantité de système agent réticulant (AR^{"SiH"}) étant telle que dans lesdites compositions durcissables le rapport nombre de moles de "SiH" provenant notamment dudit système agent de réticulation (AR^{"SiH"}) et éventuellement de la résine modulateur (RM^{"SiH"}) lorsqu'elle est présente / nombre de moles de "Si alcényle" provenant notamment de l'huile polyorganosiloxane (HB^{"Si alcényle"}) et/ou de la résine modulateur (RM^{"Si alcényle"}), soit supérieur à 1.

5. Compositions silicones durcissables comprenant un polymère organosilicique portant des substituants à insaturation oléfinique, un polymère organohydrogénosiloxane, un catalyseur d'hydrosilylation et l'inhibiteur d'hydrosilylation qui a été défini dans l'une quelconque des revendications 1) à 3).

6. Compositions silicones durcissables selon la revendication 5, **caractérisées en ce qu'**elles comprennent :
- (1) z = (100-x-y) parties en poids d'au moins une huile polydiorganosiloxane "Si alcényle" de base (HB^{"Si alcényle"}) constitué par un polydiorganosiloxane linéaire ou cyclique bloqué par des groupes terminaux triorganosiloxanes, lesdits radicaux organiques étant des groupes alkyle ou cycloalkyle en C₁-C₁₈, alcényle en C₂-C₂₀, alcényl(C₃-C₉)oxyalkylène(C₂-C₄), phényle, au moins 80% molaire desdits radicaux étant un groupe méthyle, au moins 0,1% molaire desdits radicaux organiques étant des groupes alcényle ou alcényloxyalkylène identiques ou différents liés directement au silicium ("Si alcényle") ;
- (2) x parties en poids d'au moins une résine modulateur d'adhérence organopolysiloxane à fonctions "Si alcényle" (RM^{"Si alcényle"}), constituée d'au moins deux types de motifs siloxy différents "M" (R₃SiO_{1/2}), "Q" (SiO₂) et/ou "T" (RSiO_{3/2}) et éventuellement "D" (R₂SiO_{2/2}), les radicaux organiques étant identiques ou différents et représentant des groupes alkyle ou cycloalkyle en C₁-C₁₈, alcényle en C₂-C₂₀, alcényl(C₃-C₉)oxyalkylène(C₂-C₄), au moins 80% molaire des radicaux organiques représentant un groupe méthyle, ladite résine contenant au moins 0,1% molaire desdits groupes alcényle ou alcényloxyalkylène identiques ou différents liés au silicium ("Si alcényle"), avec un rapport nombre de motifs "M"/ nombre de motifs "Q" et/ou "T" de 0,6-1, le nombre de motifs "D" éventuels étant de 0,5-10 pour 100 moles de résine ;
- (3) y parties en poids d'au moins une résine modulateur d'adhérence à fonction "SiH" organohydrogénopolysiloxane (RM^{"SiH"}) constituée d'au moins deux types de motifs siloxy différents "M" (R₃SiO_{1/2} ou R₂HSiO_{1/2}), "Q" et/ou "T" (RSiO_{3/2} ou HSiO_{3/2}) et éventuellement "D" (R₂SiO_{2/2} ou RHSiO_{2/2}), les radicaux organiques R étant semblables ou différents et représentant des groupes alkyle en C₁-C₁₈, phényle, au moins 80% molaire desdits radicaux représentant un groupe méthyle, ladite résine contenant au moins 0,5% molaire d'atomes d'hydrogène liés directement au silicium ("SiH"), avec un rapport nombre de motifs "M" / nombre de motifs "Q" et/ou "T" de 0,6-1, le nombre de motifs "D" éventuels étant de 0,5-10 pour 100 moles de résine, lesdites résines contenant moins de 10 % molaire de fonctions silanol ;
les valeurs de x et y étant telles que :
. lorsque y=0, x va de 0 à 100
. lorsque x=0, y va de 0 à 50
. lorsque x et y sont différents de 0, x+y peut aller jusqu'à 100 avec toutefois x supérieur ou égal à y ;
- (4) un agent de réticulation (AR^{"SiH"}) constitué
. (4i) (4ii) d'au moins un dihydrogénotetraorganodisiloxane (ARi^{"SiH"}) et/ou d'au moins un polyorganohydrogénosiloxane linéaire ou cyclique (ARii^{"SiH"}) contenant de 1,6 à 0,9 % molaire d'atomes d'hydrogène liés directement au silicium ("SiH") dans la chaîne, les radicaux organiques identiques ou différents étant des groupes alkyle en C₁-C₁₈, phényle, au moins 80 % molaire desdits radicaux organiques étant des groupes méthyle ;
. (4iii) éventuellement en mélange avec au moins une résine polyorganohydrogénosiloxane (ARiii^{"SiH"}) constituée de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
selon un rapport pondéral (ARi^{"SiH"} et/ou ARii^{"SiH"}) / (ARiii^{"SiH"}) pouvant aller de 100/0 à 1/100;
- (5) de l'ordre de 0,1 à 1 partie en poids d'un alcool α-acétylénique de formule (I) qui a été défini dans l'une quelconque des revendications 1) à 3), comme agent inhibiteur (Al)
- (6) une quantité catalytiquement efficace d'un catalyseur d'hydrosilylation (C)
la quantité de système agent réticulant (AR^{"SiH"}) étant telle que dans lesdites compositions durcissables le rapport nombre de moles de "SiH" provenant notamment dudit système agent de réticulation (AR^{"SiH"}) et éventuellement de la résine modulateur (RM^{"SiH"}) lorsqu'elle est présente / nombre de moles de "Si alcényle" provenant notamment de l'huile polyorganosiloxane (HB^{"Si alcényle"}) et/ou de la résine modulateur (RM^{"Si alcényle"}), soit supérieur à 1.

7. Compositions selon la revendication 6) **caractérisées en ce qu'**elles se trouvent sous forme dispersée dans des émulsions aqueuses d'agents tensio-actifs non-ioniques contenant de l'ordre de 1-3% en poids d'agent tensio-actif, lesdites émulsions étant mises en oeuvre à raison de 40-70 parties en poids pour 60-30 parties en poids de polymère silicone.

8. Compositions selon la revendication 7) **caractérisées en ce qu'**elles contiennent en outre des latex de polymères organiques selon des quantités correspondant à un rapport pondéral silicone/polymère organique, exprimé en matières sèches, de l'ordre de 5/95 à 95/5.

9. Compositions selon l'une quelconque des revendications 6 à 8, **caractérisées en ce que** l'agent de réticulation est un mélange :
. d'au moins un dihydrogénotetraorganodisiloxane (ARi^{"SiH"}) et/ou d'au moins un polyorganohydrogénosiloxane linéaire ou cyclique (ARii^{"SiH"}) contenant de 1,6 à 0,9 % molaire d'atomes d'hydrogène liés directement au silicium ("SiH") dans la chaîne, les radicaux organiques identiques ou différents étant des groupes alkyle en C₁-C₁₈, phényle, au moins 80 % molaire desdits radicaux organiques étant des groupes méthyle, avec
. au moins une résine polyorganohydrogéno-siloxane (ARiii^{"SiH"}) constituée de motifs R₂HSiO_{1/2}, RSiO_{3/2} et/ou SiO₂, les radicaux organiques R, identiques ou différents, étant des groupes alkyle en C₁-C₁₈, phényle, au moins 80 % molaire desdits radicaux organiques étant des groupes méthyle ;
selon un rapport pondéral (ARi^{"SiH"} et/ou ARii^{"SiH"}) / (ARiii^{"SiH"}) pouvant aller de 100/25 à 25/100.

10. "Composant" à base de l'alcool acétylénique de formule (I) qui a été défini dans l'une quelconque des revendications 1) à 3) pour la réalisation des compositions durcissables faisant l'objet de l'une quelconque des revendications 6) à 9) **caractérisé en ce qu'**il est choisi dans le groupe formé par les "composants" constitués :
- a) d'un mélange de l'inhibiteur (Al), de l'huile polydiorganosiloxane "Si alcényle" de base (HB^{"Si alcényle"}) et/ou de la résine modulateur d'adhérence organopolysiloxane à fonctions "Si aicényle" (RM^{"Si alcényle"}), telle(s) quelle(s) ou en émulsion aqueuse ;
- b) d'un mélange de l'inhibiteur (Al), du dihydrogénotetraorganodisiloxane réticulant (ARi^{"SiH"}) et/ou du polyorganohydrogénosiloxane linéaire ou cyclique réticulant (ARii^{"SiH"}) et/ou de la résine polyorganohydrogénosiloxane (ARiii^{"SiH"}) et/ou de la résine modulateur à fonctions "SiH" (RM^{"SIH"}), tel(s) quel(s) ou en émulsion aqueuse ;
- c) d'un mélange de l'inhibiteur (Al), de la résine modulateur d'adhérence organopolysiloxane à fonctions "Si alcényle" (RM^{"Si alcényle"}) et de la résine modulateur à fonctions "SiH" (RM^{"SiH"}), telle(s) quelle(s) ou en émulsion aqueuse ;
- d) d'un mélange de l'inhibiteur (Al), de l'huile polydiorganosiloxane "Si alcényle" de base (HB^{"Si alcényle"}) et/ou de la résine modulateur d'adhérence organopolysiloxane à fonctions "Si alcényle" (RM^{"Si alcényle"}), et du dihydrogénotetraorganodisiloxane réticulant (ARi^{"SiH"}) et/ou du polyorganohydrogénosiloxane linéaire ou cyclique réticulant (ARii^{"SiH"}) et/ou de la résine polyorganohydrogénosiloxane (ARiii^{"SiH"}) et/ou de la résine modulateur à fonctions "SiH" (RM^{"SiH"}), tel(s) quel(s) ou en émulsion aqueuse ;
- e) de l'un quelconque des "composants" a) à d) ci-dessus comprenant en outre un latex de polymère organique.

11. Procédé pour rendre des articles non adhérents à des surfaces auxquelles ils adhèreraient normalement, **caractérisé en ce qu'**on applique entre 0,5 et 2g par m² de surface dudit article à enduire de composition faisant l'objet de l'une quelconque des revendications 5) à 9) et **en ce qu'**on réticule ladite composition à la chaleur.

## Patentansprüche

1. Verwendung eines acetylenischen Alkohols der Formel (I)
R-(R')C(OH)-C≡CH (I)
in der
. R einen geraden oder verzweigten Rest Alkyl oder einen Rest Phenyl darstellt,
. R' H oder einen geraden oder verzweigten Rest Alkyl oder einen Rest Phenyl bedeutet;
wobei die Gesamtanzahl von Kohlenstoffatomen, die in R und R' enthalten sind, mindestens 9 und höchstens 20 beträgt,
als Inhibitor der Hydrosilylierung in härtbaren Silicon-Zusammensetzungen, die ein Organosilicium-Polymer, das Substituenten olefinischer Nichtsättigung trägt, ein Organohydrogensiloxan-Polymer und einen Hydrosilylierungs-Katalysator umfassen.

2. Verwendung nach Anspruch 1, **dadurch gekennzeichnet, daß** der acetylenische Alkohol einen Siedepunkt von über 250 °C aufweist.

3. Verwendung nach Anspruch 1 oder 2, **dadurch gekennzeichnet, daß** der acetylenische Alkohol ausgewählt wird unter
. 3-Methyl-1-dodecin-3-ol ;
. 3,7,11-Trimethyl-1-dodecin-3-ol;
. 1,1-Diphenyl-2-propin-1-ol;
. 3-Ethyl-6-ethyl-1-nonin-3-ol;
. 3-Methyl-1-pentadecin-3-ol.

4. Verwendung nach irgendeinem der Ansprüche 1 bis 3, **dadurch gekennzeichnet, daß** die härtbaren Zusammensetzungen umfassen:
- z = (100-x-y) Gewichtsteile von mindestens einem Polydiorganosiloxan-Öl "Si alkenyl" der Basis (HB^{"Si alkenyl"}), gebildet durch ein gerades oder cyclisches, durch Triorganosiloxan-Endgruppen blockiertes Polydiorganosiloxan, wobei die genannten organischen Reste Gruppen Alkyl oder Cycloalkyl mit 1 bis 18 Kohlenstoffatomen, Alkenyl mit 2 bis 20 Kohlenstoffatomen, Alkenyl(C₃-C₉)-oxyalkylen(C₂-C₄), Phenyl sind, und mindestens 80 Mol-% der genannten Reste eine Gruppe Methyl darstellen, mindestens 0,1 Mol-% der genannten organischen Reste gleiche oder verschiedene Gruppen Alkenyl oder Alkenyloxyalkylen sind, direkt gebunden an das Silicium ("Si alkenyl") ;
- x Gewichtsteile von mindestens einem die Haftfähigkeit modulierenden Organopolysiloxan-Harz mit Funktionen "Si alkenyl" (RM^{"Si alkenyl"}), bestehend aus mindestens zwei unterschiedlichen Typen von Struktureinheiten Siloxy "M" (R₃SiO_{1/2}), "Q" (SiO₂) und/oder "T" (RSiO_{3/2}) und gegebenenfalls "D" (R₂SiO_{2/2}), wobei die organischen Reste gleich oder verschieden sind und Gruppen Alkyl oder Cycloalkyl mit 1 bis 18 Kohlenstoffatomen, Alkenyl mit 2 bis 20 Kohlenstoffatomen, Alkenyl (C₃-C₉)-oxyalkylen(C₂-C₄) aufweisen, und mindestens 80 Mol-% der organischen Reste eine Gruppe Methyl darstellen und das genannte Harz mindestens 0,1 Mol-% der genannten gleichen oder verschiedenen Gruppen Alkenyl oder Alkenyloxyalkylen enthält, direkt gebunden an das Silicium ("Si alkenyl"), mit einem Verhältnis der Anzahl Struktureinheiten "M"/Anzahl Struktureinheiten "Q" und/oder "T" von 0,6-1, wobei die Anzahl der eventuellen Struktureinheiten "D" 0,5-10 pro 100 Mole Harz beträgt;
- y Gewichtsteile von mindestens einem die Haftfähigkeit modulierenden Harz mit Funktionen "SiH" Organohydrogenpolysiloxan (RM^{"SiH"}), bestehend aus mindestens zwei unterschiedlichen Typen von Struktureinheiten Siloxy "M" (R₃SiO_{1/2} oder R₂HSiO_{1/2}), "Q" und/oder "T" (RSiO_{3/2} oder HSiO_{3/2}) und gegebenenfalls "D" (R₂SiO_{2/2} oder RHSiO_{2/2}), wobei die organischen Reste R gleich oder verschieden sind und Gruppen Alkyl mit 1 bis 18 Kohlenstoffatomen, Phenyl aufweisen, und mindestens 80 Mol-% der genannten Reste eine Gruppe Methyl darstellen und das genannte Harz mindestens 0,5 Mol-% Wasserstoffatome enthält, direkt gebunden an das Silicium ("SiH"), mit einem Verhältnis der Anzahl Struktureinheiten "M"/Anzahl Struktureinheiten "Q" und/oder "T" von 0,6-1, wobei die Anzahl der eventuellen Struktureinheiten "D" 0,5-10 pro 100 Mole Harz beträgt und die genannten Harze weniger als 10 Mol-% Funktionen Silanol enthalten;
die Werte von x und y so beschaffen sind, daß
. wenn y=0 ist, x von 0 bis 100 beträgt,
. wenn x=0 ist, y von 0 bis 50 beträgt,
. wenn x und y von 0 verschieden sind, x+y bis zu 100 betragen kann mit jedoch x höher oder gleich y;
- ein vernetzungsmittel (AR^{"SiH"}), gebildet durch
. mindestens ein Dihydrogentetraorganodisiloxan (ARi^{"SiH"}) und/oder mindestens ein gerades oder cyclisches Polyorganohydrogensiloxan (ARii^{"SiH"}), enthaltend 1,6 bis 0,9 Mol-% Wasserstoffatome, direkt an das Silicium ("SiH") in der Kette gebunden, wobei die gleichen oder verschiedenen organischen Reste Gruppen Alkyl mit 1 bis 18 Kohlenstoffatomen, Phenyl sind, und mindestens 80 Mol-% der genannten organischen Reste Gruppen Methyl darstellen;
. gegebenenfalls in Mischung mit mindestens einem Polyorganohydrogensiloxan-Harz (ARiii^{"SiH"}), gebildet aus Struktureinheiten R₂HSiO_{1/2}, RSiO_{3/2} und/oder SiO₂, wobei die gleichen oder verschiedenen organischen Reste R Gruppen Alkyl mit 1 bis 18 Kohlenstoffatomen, Phenyl sind und mindestens 80 Mol-% der genannten organischen Reste Gruppen Methyl darstellen;
gemäß einem Gewichtsverhältnis (ARi^{"SiH"} und/oder ARii^{"SiH"}), /(ARiii^{"SiH"}) von 100/0 bis 1/100,
- eine katalytisch wirksame Menge von einem Hydrosilylierungs-Katalysator (C), wobei die Menge des Vernetzungsmittel-Systems (AR^{"SiH"}) so beschaffen ist, daß in den genannten härtbaren Zusammensetzungen das Verhältnis der Anzahl von Molen "SiH", die insbesondere von dem genannten Vernetzungsmittel-system (AR^{"SiH"}) und gegebenenfalls von dem Modulator-Harz (RM^{"SiH"}) stammen, wenn es anwesend ist, zur Anzahl von Molen "Si alkenyl", die insbesondere von dem Polyorganosiloxan-Öl (HB^{"Si alkenyl"}) und/oder von dem Modulator-Harz (RM^{"Si alkenyl"}) stammen, über 1 beträgt.

5. Härtbare Silicon-Zusammensetzungen, umfassend ein Organosilicium-Polymer, das Substituenten olefinischer Nichtsättigung trägt, ein Organohydrogensiloxan-Polymer, einen Hydrosilylierungs-Katalysator und einen Inhibitor der Hydrosilylierung, der in irgendeinem der Ansprüche 1 bis 3 definiert wurde.

6. Härtbare Silicon-Zusammensetzungen nach Anspruch 5, **dadurch gekennzeichnet, daß** sie umfassen:
- (1) z = (100-x-y) Gewichtsteile von mindestens einem Polydiorganosiloxan-Öl "Si alkenyl" der Basis (HB^{"Si alkenyl"}), gebildet durch ein gerades oder cyclisches, durch Triorganosiloxan-Endgruppen blockiertes Polydiorganosiloxan, wobei die genannten organischen Reste Gruppen Alkyl oder Cycloalkyl mit 1 bis 18 Kohlenstoffatomen, Alkenyl mit 2 bis 20 Kohlenstoffatomen, Alkenyl-(C₃-C₉)-oxyalkylen(C₂-C₄), Phenyl sind, und mindestens 80 Mol-% der genannten Reste eine Gruppe Methyl darstellen, mindestens 0,1 Mol-% der genannten organischen Reste gleiche oder verschiedene Gruppen Alkenyl oder Alkenyloxyalkylen sind, direkt gebunden an das Silicium ("Si alkenyl");
- (2) x Gewichtsteile von mindestens einem die Haftfähigkeit modulierenden Organopolysiloxan-Harz mit Funktionen "Si alkenyl" (RM^{"Si alkenyl"}), bestehend aus mindestens zwei unterschiedlichen Typen von Struktureinheiten Siloxy "M" (R₃SiO_{1/2}), "Q" (SiO₂) und/oder "T" (RSiO_{3/2}) und gegebenenfalls "D" (R₂SiO_{2/2}), wobei die organischen Reste gleich oder verschieden sind und Gruppen Alkyl oder Cycloalkyl mit 1 bis 18 Kohlenstoffatomen, Alkenyl mit 2 bis 20 Kohlenstoffatomen, Alkenyl (C₃-C₉) -oxyalkylen(C₂-C₄) aufweisen, und mindestens 80 Mol-% der organischen Reste eine Gruppe Methyl darstellen und das genannte Harz mindestens 0,1 Mol-% der genannten gleichen oder verschiedenen Gruppen Alkenyl oder Alkenyloxyalkylen enthält, direkt gebunden an das Silicium ("Si alkenyl"), mit einem Verhältnis der Anzahl Struktureinheiten "M"/Anzahl Struktureinheiten "Q" und/oder "T" von 0,6-1, wobei die Anzahl der eventuellen Struktureinheiten "D" 0,5-10 pro 100 Mole Harz beträgt;
- (3) y Gewichtsteile von mindestens einem die Haftfähigkeit modulierenden Harz mit Funktionen "SiH" Organohydrogenpolysiloxan (RM^{"SiH"}), bestehend aus mindestens zwei unterschiedlichen Typen von Struktureinheiten Siloxy "M" (R₃SiO_{1/2} oder R₂HSiO_{1/2}), "Q" und/oder "T" (RSiO_{3/2} oder HSiO_{3/2}) und gegebenenfalls "D" (R₂SiO_{2/2} oder RHSiO_{2/2}), wobei die organischen Reste R gleich oder verschieden sind und Gruppen Alkyl mit 1 bis 18 Kohlenstoffatomen, Phenyl aufweisen, und mindestens 80 Mol-% der genannten Reste eine Gruppe Methyl darstellen und das genannte Harz mindestens 0,5 Mol-% Wasserstoffatome enthält, direkt gebunden an das Silicium ("SiH"), mit einem Verhältnis der Anzahl Struktureinheiten "M"/Anzahl Struktureinheiten "Q" und/oder "T" von 0,6-1, wobei die Anzahl der eventuellen Struktureinheiten "D" 0,5-10 pro 100 Mole Harz beträgt und die genannten Harze weniger als 10 Mol-% Funktionen Silanol enthalten;
die Werte von x und y so beschaffen sind, daß
. wenn y=0 ist, x von 0 bis 100 beträgt,
. wenn x=0 ist, y von 0 bis 50 beträgt,
. wenn x und y von 0 verschieden sind, x+y bis zu 100 betragen kann mit jedoch x höher oder gleich y;
- (4) ein Vernetzungsmittel (AR^{"SiH"}), gebildet durch
. (4i) (4ii) mindestens ein Dihydrogentetraorganodisiloxan (ARi^{"SiH"}) und/oder mindestens ein gerades oder cyclisches Polyorganohydrogensiloxan (ARii^{"SiH"}), enthaltend 1,6 bis 0,9 Mol-% Wasserstoffatome, direkt an das Silicium ("SiH") in der Kette gebunden, wobei die gleichen oder verschiedenen organischen Reste Gruppen Alkyl mit 1 bis 18 Kohlenstoffatomen, Phenyl sind, und mindestens 80 Mol-% der genannten organischen Reste Gruppen Methyl darstellen;
. (4iii) gegebenenfalls in Mischung mit mindestens einem Polyorganohydrogensiloxan-Harz (ARiii^{"SiH"}), gebildet aus Struktureinheiten R₂HSiO_{1/2}, RSiO_{3/2} und/oder SiO₂, wobei die gleichen oder verschiedenen organischen Reste R Gruppen Alkyl mit 1 bis 18 Kohlenstoffatomen, Phenyl sind und mindestens 80 Mol-% der genannten organischen Reste Gruppen Methyl darstellen;
gemäß einem Gewichtsverhältnis (ARi^{"SiH"} und/oder ARii^{"SiH"}), / (ARiii^{"SiH"}) von 100/0 bis 1/100;
- (5) in der Größenordnung von 0,1 bis 1 Gewichtsteilen eines α-acetylenischen Alkohols der Formel (I), wie in irgendeinem der Ansprüche 1 bis 3 definiert, als Inhibitormittel (AI),
- (6) eine katalytisch wirksame Menge von einem Hydrosilylierungs-Katalysator (C), wobei die Menge des Vernetzungsmittel-Systems (AR^{"SiH"}) so beschaffen ist, daß in den genannten härtbaren Zusammensetzungen das Verhältnis der Anzahl von Molen "SiH", die insbesondere von dem genannten Vernetzungsmittel-System (AR^{"SiH"}) und gegebenenfalls von dem Modulator-Harz (RM^{"SiH"}) stammen, wenn es anwesend ist, zur Anzahl von Molen "Si alkenyl", die insbesondere von dem Polyorganosiloxan-Öl (HB^{"Si alkenyl"}) und/oder von dem Modulator-Harz (RM^{"Si alkenyl"}) stammen, über 1 beträgt.

7. Zusammensetzungen nach Anspruch 6, **dadurch gekennzeichnet, daß** sie in dispergierter Form in wäßrigen Emulsionen von nichtionischen oberflächenaktiven Mitteln vorliegen, enthaltend in der Größenordnung von 1-3 Gew.-% oberflächenaktives Mittel, wobei die genannten Emulsionen in einem Verhältnis von 40-70 Gewichtsteilen pro 60-30 Gewichtsteile Siliconpolymer eingesetzt werden.

8. Zusammensetzungen nach Anspruch 7, **dadurch gekennzeichnet, daß** sie außerdem Latex von organischen Polymeren in Mengen enthalten, die einem Gewichtsverhältnis Silicon/organisches Polymer, ausgedrückt in Trockenmasse, in der Größenordnung von 5/95 bis 95/5 entsprechen.

9. Zusammensetzungen nach irgendeinem der Ansprüche 6 bis 8, **dadurch gekennzeichnet, daß** das Vernetzungsmittel eine Mischung ist von:
. mindestens einem Dihydrogentetraorganodisiloxan (ARi^{"SiH"}) und/oder mindestens einem geraden oder cyclischen Polyorganohydrogensiloxan (ARii^{"SiH"}), enthaltend 1,6 bis 0,9 Mol-% Wasserstoffatome, direkt an das Silicium ("SiH") in der Kette gebunden, wobei die gleichen oder verschiedenen organischen Reste Gruppen Alkyl mit 1 bis 18 Kohlenstoffatomen, Phenyl sind, und mindestens 80 Mol-% der genannten organischen Reste Gruppen Methyl darstellen; mit
. mindestens einem Polyorganohydrogensiloxan-Harz (ARiii^{"SiH"}), gebildet aus Struktureinheiten R₂HSiO_{1/2}, RSiO_{3/2} und/oder SiO₂, wobei die gleichen oder verschiedenen organischen Reste R Gruppen Alkyl mit 1 bis 18 Kohlenstoffatomen, Phenyl sind und mindestens 80 Mol-% der genannten organischen Reste Gruppen Methyl darstellen; gemäß einem Gewichtsverhältnis (ARi^{"SiH"} und/oder ARii^{"SiH"}), /(ARiii^{"SiH"}) von 100/25 bis 25/100.

10. "Bestandteil" auf der Basis von acetylenischem Alkohol der Formel (I), wie in irgendeinem der Ansprüche 1 bis 3 definiert, für die Realisierung von härtbaren Zusammensetzungen nach irgendeinem der Ansprüche 6 bis 9, **dadurch gekennzeichnet, daß** es aus der Gruppe gewählt wird, die gebildet wird durch die "Bestandteile", bestehend aus:
- a) einer Mischung von Inhibitor (AI), von Polydiorganosiloxan-Öl "Si alkenyl" der Basis (HB^{"Si alkenyl"}) und/oder dem die Haftfähigkeit modulierenden Organopolysiloxan-Harz mit Funktionen "Si alkeriyl" (RM^{"Si alkenyl"}), so wie sie sind oder in wäßriger Emulsion;
- b) einer Mischung von Inhibitor (AI), von vernetzendem Dihydrogentetraorganodisiloxan (ARi^{"SiH"}) und/oder von vernetzendem, geraden oder cyclischen Polyorganohydrogensiloxan (ARii^{"SiH"}) und/oder von Polyorganohydrogensiloxan-Harz (ARiii^{"SiH"}) und/oder von Modulatorharz mit Funktionen "SiH" (RM^{"SiH"}), so wie sie sind oder in wäßriger Emulsion;
- c) einer Mischung von Inhibitor (AI), von die Haftfähigkeit modulierendem Organopolysiloxan-Harz mit Funktionen "Si alkenyl" (RM^{"Si alkenyl"}) und/oder von Modulatorharz mit Funktionen "SiH" (RM^{"SiH"}), so wie sie sind oder in wäßriger Emulsion;
- d) einer Mischung von Inhibitor (AI), von Polydiorganosiloxan-Öl "Si alkenyl" der Basis (HB^{"Si alkenyl"}) und/oder dem die Haftfähigkeit modulierenden Organopolysiloxan-Harz mit Funktionen "Si alkenyl" (RM^{"Si alkenyl"}) und von vernetzendem Dihydrogentetraorganodisiloxan (ARi^{"SiH"}) und/oder von vernetzendem, geraden oder cyclischen Polyorganohydrogensiloxan (ARii^{"SiH"}) und/oder von Polyorganohydrogensiloxan-Harz (ARiii^{"SiH"}) und/oder von Modulatorharz mit Funktionen "SiH" (RM^{"SiH"}), so wie sie sind oder in wäßriger Emulsion;
- e) irgendeinem der obigen "Bestandteile" a) bis d), die außerdem einen Latex von organischem Polymer umfassen.

11. Verfahren zum Antihaft-Ausrüsten von Artikeln für Oberflächen, an denen sie normalerweise haften würden, **dadurch gekennzeichnet, daß** man zwischen 0,5 g und 2 g der Zusammensetzung nach irgendeinem der Ansprüche 5 bis 9 pro m² Oberfläche des genannten, zu beschichtenden Artikels aufbringt, und daß man die genannte Zusammensetzung in der Wärme vernetzt.

## Claims

1. Use of an acetylenic alcohol which has the formula
R-(R')C(OH)-C/CH (I)
in which formula
- R is a linear or branched alkyl radical or a phenyl radical,
- R' is H or a linear or branched alkyl radical or a phenyl radical,
the total number of carbon atoms contained in R and R' being at least 9 and at most equal to 20,
as hydrosilylation inhibitor in curable silicone compositions comprising an organosilicon polymer which carries substituents containing olefinic unsaturation, an organohydrosiloxane polymer and a hydrosilylation catalyst.

2. Use according to claim 1, **characterized in that** the acetylenic alcohol has a boiling point higher than 250°C.

3. Use according to claim 1 or 2, **characterized in that** the acetylenic alcohol is chosen from
- 3-methyl-1-dodecyn-3-ol,
- 3,7,11-trimethyl-1-dodecyn-3-ol,
- 1,1-diphenyl-2-propyn-1-ol,
- 3-ethyl-6-ethyl-1-nonyn-3-ol,
- 3-methyl-1-pentadecyn-3-ol.

4. Use according to any one of claims 1 to 3, **characterized in that** the curable compositions comprise:
- z = (100-x-y) parts by weight of at least one base "Si alkenyl" polydiorganosiloxane oil (BO^{"Si alkenyl"}) consisting of a linear or cyclic polydiorganosiloxane blocked using triorganosiloxane end groups, the said organic radicals being C₁-C₁₈ alkyl or cycloalkyl, C₂-C₂₀ alkenyl, (C₃-C₉ alkenyl)oxyalkylene(C₂-C₄) or phenyl groups, at least 80 mol% of the said radicals being a methyl group, at least 0.1 mol% of the said organic radicals being identical or different alkenyl or alkenyloxyalkylene groups bonded directly to silicon ("Si alkenyl");
- x parts by weight of at least one organopolysiloxane adhesion modifier resin containing "Si alkenyl" functional groups (MR^{"Si alkenyl"}), consisting of at least two types of different siloxy units "M" (R₃SiO_{1/2}), "Q" (SiO₂) and/or "T" (RSiO_{3/2}) and optionally "D" (R₂SiO_{2/2}), the organic radicals being identical or different and denoting C₁-C₁₈ alkyl or cycloalkyl, C₂-C₂₀ alkenyl or (C₃-C₉ alkenyl)oxyalkylene(C₂-C₄) groups, at least 80 mol% of the organic radicals denoting a methyl group, the said resin containing at least 0.1 mol% of the said identical or different alkenyl or alkenyloxyalkylene groups bonded to silicon ("Si alkenyl") with a ratio of the number of "M" units/number of "Q" and/or "T" units of 0.6-1, the number of optional "D" units being 0.5-10 per 100 moles of resin;
- y parts by weight of at least one adhesion modifier resin containing an organohydropolysiloxane "SiH" functional group (MR^{"SiH"}) consisting of at least two types of different siloxy units "M" (R₃SiO_{1/2} or R₂HSiO_{1/2}), "Q" and/or "T" (RSiO_{3/2} or HSiO_{3/2}) and optionally "D" (R₂SiO_{2/2} or RHSiO_{2/2}), the organic radicals R being similar or different and denoting C₁-C₁₈ alkyl or phenyl groups, at least 80 mol% of the said radicals denoting a methyl group, the said resin containing at least 0.5 mol% of hydrogen atoms bonded directly to silicon ("SiH"), with a ratio of the number of "M" units/number of "Q" and/or "T" units of 0.6-1, the number of optional "D" units being 0.5-10 per 100 moles of resin, the said resins containing less than 10 mol% of silanol functional groups;
the values of x and y being such that:
when y = 0, x ranges from 0 to 100
when x = 0, y ranges from 0 to 50
when x and y are other than 0, x + y may range up to 100 with, however, x greater than or equal to y;
- a crosslinking agent (CA^{"SiH"}) consisting
. of at least one dihydrotetraorganodisiloxane . (CAi^{"SiH"}) and/or at least one linear or cyclic polyorganohydrosiloxane (CAii^{"SiH"}) containing from 1.6 to 0.9 mol% of hydrogen atoms bonded directly to silicon ("SiH") in the chain, the identical or different organic radicals being C₁-C₁₈ alkyl or phenyl groups, at least 80 mol% of the said organic radicals being methyl groups;
. optionally mixed with at least one polyorganohydrosiloxane resin (CAiii^{"SiH"}) consisting of R₂HSiO_{1/2}, RSiO_{3/2} and/or SiO₂ units, the identical or different organic radicals R being C₁-C₁₈ alkyl or phenyl groups, at least 80 mol% of the said organic radicals being methyl groups;
in a weight ratio (CAi^{"SiH"} and/or CAii^{"SiH"})/(CAiii^{"SiH"}) which can range from 100/0 to 1/100;
- a catalytically effective quantity of a hydrosilylation catalyst (C)
the quantity of crosslinking agent system (CA^{"SiH"}) being such that in the said curable compositions the ratio of the number of moles of "SiH" originating especially from the said crosslinking agent system (CA^{"SiH"}) and optionally from the modifier resin (MR^{"SiH"}) when it is present/number of moles of "Si alkenyl" originating especially from the polyorganosiloxane oil (BO^{"Si alkenyl"}) and/or from the modifier resin (MR^{"Si alkenyl"}) is greater than 1.

5. Curable silicone compositions comprising an organosilicon polymer which carries substituents containing olefinic unsaturation, an organohydrosiloxane polymer, a hydrosilylation catalyst and the hydrosilylation inhibitor defined in any one of claims 1 to 3.

6. Curable silicone compositions according to claim 5, **characterized in that** they comprise:
- (1) z = (100-x-y) parts by weight of at least one base "Si alkenyl" polydiorganosiloxane oil (BO^{"Si alkenyl"}) consisting of a linear or cyclic polydiorganosiloxane blocked using triorganosiloxane end groups, the said organic radicals being C₁-C₁₈ alkyl or cycloalkyl, C₂-C₂₀ alkenyl, (C₃-C₉ alkenyl)oxyalkylene(C₂-C₄) or phenyl groups, at least 80 mol% of the said radicals being a methyl group, at least 0.1 mol% of the said organic radicals being identical or different alkenyl or alkenyloxyalkylene groups bonded directly to silicon ("Si alkenyl");
- (2) x parts by weight of at least one organopolysiloxane adhesion modifier resin containing "Si alkenyl" functional groups (MR^{"Si alkenyl"}), consisting of at least two types of different siloxy units "M" (R₃SiO_{1/2}), "Q" (SiO₂) and/or "T" (RSiO_{3/2}) and optionally "D" (R₂SiO_{2/2}), the organic radicals being identical or different and denoting C₁-C₁₈ alkyl or cycloalkyl, C₂-C₂₀ alkenyl or (C₃-C₉ alkenyl)oxyalkylene(C₂-C₄) groups, at least 80 mol% of the organic radicals denoting a methyl group, the said resin containing at least 0.1 mol% of the said identical or different alkenyl or alkenyloxyalkylene groups bonded to silicon ("Si alkenyl") with a ratio of the number of "M" units/number of "Q" and/or "T" units of 0.6-1, the number of optional "D" units being 0.5-10 per 100 moles of resin;
- (3) y parts by weight of at least one adhesion modifier resin containing an organohydropolysiloxane "SiH" functional group (MR^{"SiH"}) consisting of at least two types of different siloxy units "M" (R₃SiO_{1/2} or R₂HSiO_{1/2}), "Q" and/or "T" (RSiO_{3/2} or HSiO_{3/2}) and optionally "D" (R₂SiO_{2/2} or RHSiO_{2/2}), the organic radicals R being similar or different and denoting C₁-C₁₈ alkyl or phenyl groups, at least 80 mol% of the said radicals denoting a methyl group, the said resin containing at least 0.5 mol% of hydrogen atoms bonded directly to silicon ("SiH"), with a ratio of the number of "M" units/number of "Q" and/or "T" units of 0.6-1, the number of optional "D" units being 0.5-10 per 100 moles of resin, the said resins containing less than 10 mol% of silanol functional groups;
the values of x and y being such that:
when y = 0, x ranges from 0 to 100
when x = 0, y ranges from 0 to 50
when x and y are other than 0, x + y may range up to 100 with, however, x greater than or equal to y;
- (4) a crosslinking agent (CA^{"SiH"}) consisting
(4i) (4ii) of at least one dihydrotetraorganodisiloxane (CAi^{"SiH"}) and/or at least one linear or cyclic polyorganohydrosiloxane (CAii^{"SiH"}) containing from 1.6 to 0.9 mol% of hydrogen atoms bonded directly to silicon ("SiH") in the chain, the identical or different organic radicals being C₁-C₁₈ alkyl or phenyl groups, at least 80 mol% of the said organic radicals being methyl groups;
(4iii) optionally mixed with at least one polyorganohydrosiloxane resin (CAiii^{"SiH"}) consisting of R₂HSiO_{1/2}, RSiO_{3/2} and/or SiO₂ units, the identical or different organic radicals R being C₁-C₁₈ alkyl or phenyl groups, at least 80 mol% of the said organic radicals being methyl groups;
in a weight ratio (CAi^{"SiH"} and/or CAii^{"SiH"})/(CAiii^{"SiH"}) which can range from 100/0 to 1/100;
- (5) of the order of 0.1 to 1 part by weight of an α-acetylenic alcohol of formula (I) which was defined in any one of claims 1 to 3, as inhibiting agent (IA)
- (6) a catalytically effective quantity of a hydrosilylation catalyst (C) the quantity of crosslinking agent system (CA^{"SiH"}) being such that in the said curable compositions the ratio of the number of moles of "SiH" originating especially from the said crosslinking agent system (CA^{"SiH"}) and optionally from the modifier resin (MR^{"SiH"}) when it is present/number of moles of "Si alkenyl" originating especially from the polyorganosiloxane oil (BO^{"Si alkenyl"}) and/or from the modifier resin (MR^{"Si alkenyl"}) is greater than 1.

7. Compositions according to claim 6, **characterized in that** they are in disperse form in aqueous emulsions of nonionic surface-active agents containing of the order of 1-3 % by weight of surface-active agent, the said emulsions being used in a proportion of 40-70 parts by weight per 60-30 parts by weight of silicone polymer.

8. Compositions according to claim 7, **characterized in that** they additionally contain latices of organic polymers in quantities corresponding to a silicone/organic polymer weight ratio, expressed as solids content, of the order of 5/95 to 95/5

9. Compositions according to any one of claims 6 to 8, **characterized in that** the crosslinking agent is a mixture:
. of at least one dihydrotetraorganodisiloxane (CAi^{"SiH"}) and/or of at least one linear or cyclic polyorganohydrosiloxane (CAii^{"SiH"}) containing from 1.6 to 0.9 mol% of hydrogen atoms linked directly to silicon ("SiH") in the chain, the identical or different organic radicals being C₁-C₁₈ alkyl or phenyl groups, at least 80 mol% of the said organic radicals being methyl groups, with
. at least one polyorganohydrosiloxane resin (CAiii^{"SiH"}) consisting of R₂HSiO_{1/2}, RSiO_{3/2} and/or SiO₂ units, the identical or different organic radicals R being C₁-C₁₈ alkyl or phenyl groups, at least 80 mol% of the said organic radicals being methyl groups;
in a weight ratio (CAi^{"SiH"} and/or CAii^{"SiH"}) / (CAiii^{"SiH"}) which can range from 100/25 to 25/100.

10. "Component" based on acetylenic alcohol of formula (I), which was defined in any one of claims 1 to 3 for the production of curable compositions forming the subject of any one of claims 6 to 9, **characterized in that** it is chosen from the group made up of the "components" consisting:
- a) of a mixture of the inhibitor (IA), of base "Si alkenyl" polydiorganosiloxane oil (BO^{"Si alkenyl"}) and/or the organopolysiloxane adhesion modifier resin containing "Si alkenyl" functional groups (MR^{"Si alkenyl"}), as it is (as they are) or in aqueous emulsion;
- b) of a mixture of the inhibitor (IA), of the crosslinking dihydrotetraorganodisiloxane (CAi^{"SiH"}) and/or of the crosslinking linear or cyclic polyorganohydrosiloxane (CAii^{"SiH"}) and/or of the polyorganohydrosiloxane resin (CAiii^{"SiH"}) and/or of the modifier resin containing "SiH" functional groups (MR^{"SiH"}), as it is (as they are) or in aqueous emulsion;
- c) of a mixture of the inhibitor (IA), of the organopolysiloxane adhesion modifier resin containing "Si alkenyl" functional groups (MR^{"Si alkenyl"}) and of the modifier resin containing "SiH" functional groups (MR^{"SiH"}) as it is (as they are) or in aqueous emulsion;
- d) of a mixture of the inhibitor (IA), of the base "Si alkenyl" polydiorganosiloxane oil (BO^{"Si alkenyl"}) and/or of the organopolysiloxane adhesion modifier resin containing "Si alkenyl" functional groups (MR^{"Si alkenyl"}) and of the crosslinking dihydrotetraorganodisiloxane (CAi^{"SiH"}) and/or of the crosslinking linear or cyclic polyorganohydrosiloxane (Caii^{"SiH"}) and/or of the polyorganohydrosiloxane resin (CAiii^{"SiH"}) and/or of the modifier resin containing "SiH" functional groups (MR^{"SiH"}), as it is (as they are) or in aqueous emulsion;
- e) any one of the "components" a) to d) above additionally comprising an organic polymer latex.

11. Process for making articles nonadhesive to surfaces to which they would normally adhere, **characterized in that** between 0.5 and 2 g of composition forming the subject of any one of claims 5 to 9 is applied per m² of area of the said article to be coated and **in that** the said composition is then crosslinked by heating.
